# EUROPÄISCHE PATENTSCHRIFT

(11) **EP 0 721 243 B1**
(45) Veröffentlichungstag und Bekanntmachung des Hinweises auf die Patenterteilung: **18.11.1998**
(21) Anmeldenummer: 95119908.2
(22) Anmeldetag: 16.12.1995
(51) Int. Cl.: H02G 3/06

(54) **Leitungsführungskanal**
Cable duct
Conduite de câbles

(30) Priorität: 05.01.1995 DE 29500130 U
(43) Veröffentlichungstag der Anmeldung: 10.07.1996
(73) Patentinhaber: Tehalit GmbH, D-67716 Heltersberg (DE)
(72) Erfinder: Lutz, Karl, D-67714 Waldfischbach-Burgalben (DE)
(74) Vertreter: Patentanwälte Möll und Bitterich

(56) Entgegenhaltungen:
- DE-U- 8 410 740

## Beschreibung

Die Erfindung betrifft Leitungsführungskanäle mit einem U-förmigen, einseitig offenen Unterteil gemäß dem Oberbegriff des Anspruchs 1 sowie mit Kupplungselementen zur Verbindung zweier Kanalabschnitte. Sie erfaßt in gleicher Weise auch Kabelträgersysteme.

Leitungsführungskanäle und Kabelträgersysteme werden vor Ort aus fabrikmäßig hergestellten Einzelelementen zusammengesetzt. Die Verbindung zweier Längenabschnitte erfolgt entweder über spezielle, angeformte Muffen oder mit Hilfe von angeschraubten Verbindungslaschen. Auch eingesteckte Kupplungsstifte und angeklemmte Kupplungsbleche sind handelsüblich (DE-U-8 410 740). Um die thermische Ausdehnung der Kanäle und Kabelträgersysteme nicht zu behindern, müssen bei der Montage definierte Dehnungsfugen eingehalten werden. Schließlich soll der fertige Kanal bzw. das fertige Kabelträgersystem eine durchgehend gleichmäßige Festigkeit und Stabilität besitzen.

Der vorliegenden Erfindung liegt die Aufgabe zugrunde, einen Leitungsführungskanal der eingangs genannten Art anzugeben, dessen Kupplungselemente einfach, schnell und sicher montiert werden können, die Einhaltung der vorgeschriebenen Dehnungsfugen erleichtern, die thermischen Ausdehnungsbewegungen nicht behindern und dem fertigen Kanal eine hohe Stabilität und ein optimales Aussehen verleihen.

Diese Aufgabe wird gelöst durch einen Kanal mit dem Merkmalen des Anspruchs 1.

Vorzugsweise bestehen Kanal und Kupplungselement aus demselben Material, nämlich faserverstärktem Kunststoff.

Dadurch entfallen thermische Ausdehnungsbewegungen zwischen diesen beiden Elementen.

Dank der an der Zunge federnd angeordneten Nase, deren Querschnitt vorzugsweise einem rechtwinkligen Dreieck entspricht, läßt sich das Kupplungselement sehr einfach positionsgenau montieren. Dank der elastischen Zunge wird die thermische Ausdehnung der Kanalabschnitte und die daraus resultierende Abnahme der Dehnungsfuge nicht behindert.

Gemäß einer vorteilhaften Ausgestaltung der Erfindung trägt das Kupplungselement an seiner Außenseite ober- und unterhalb der Zunge zusätzliche Klemmnocken. Diese sorgen dafür, daß das Kupplungselement an dem einen Leitungsführungskanalabschnitt stärker klemmt als an dem anderen, so daß es auch bei thermischen Ausdehnungsbewegungen immer seinen definierten Sitz beibehält.

Vorteilhafterweise sind auf der Innenseite der Rückenplatte Versteifungsrippen angeformt. Dadurch bleibt trotz hoher Stabilität das Gewicht gering.

Vorteilhafterweise sind an den Stirnleisten des Kupplungselements Vergrößerungsflächen angeformt. Dadurch wird die Montage der Kupplungselemente mit Hilfe eines Werkzeugs, beispielsweise eines Hammers, erleichtert. Im Falle einer etwaigen Demontage kann hier ein Abziehwerkzeug angesetzt werden.

Anhand der Zeichnung soll die Erfindung in Form eines Ausführungsbeispiels näher erläutert werden. Es zeigen
- Fig. 1: einen Querschnitt durch einen Leitungsführungskanal bzw. eines Kabelträgersystems mit eingesetzten Kupplungselementen,
- Fig. 2: einen Blick auf die Innenseite eines Kupplungselements in perspektivischer Darstellung und
- Fig. 3: einen Blick auf die Außenseite eines Kupplungselementes in perspektivischer Darstellung.

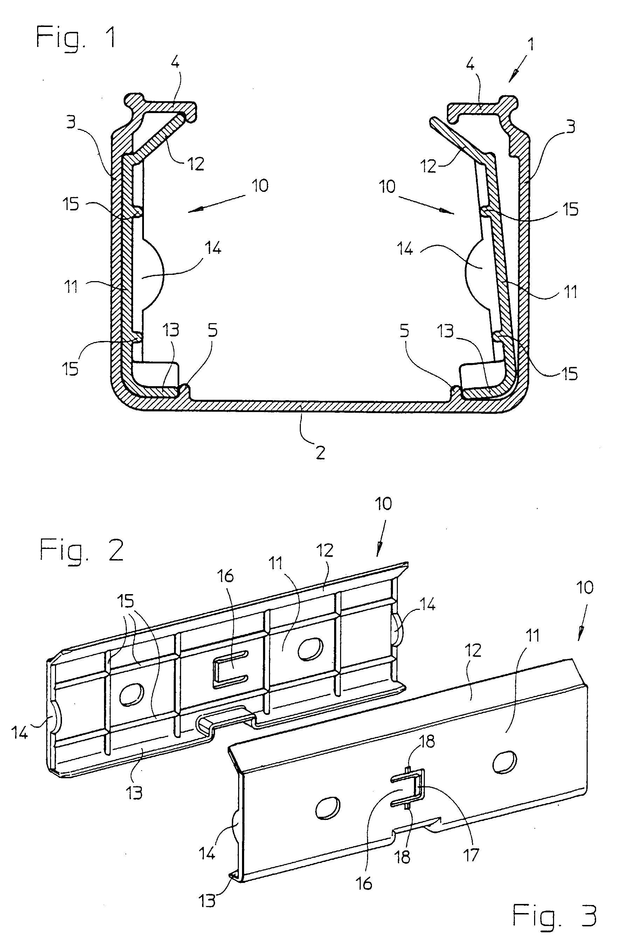

Fig. 1 zeigt als Querschnitt ein Unterteil 1 eines Leitungsführungskanals oder eines Kabelträgersystems mit einem im wesentlichen U-förmigen, oben offenen Querschnitt, bestehend aus einem Boden 2, zwei Seitenwänden 3 und zwei schmalen, parallel zum Boden verlaufenden Deckelleisten 4 mit etwa L-förmigem Querschnitt. An der Innenseite des Bodens 2 sind zwei niedrige Längsleisten 5 angeformt. Das Unterteil 1 besteht aus Kunststoff, insbesondere faserverstärktem Kunststoff.

Zur Verbindung zweier Kanalabschnitte wird an der Stoßstelle rechts und links je ein Kupplungselement 10 eingesetzt. Dieses besteht aus einer Rückenplatte 11, einer im stumpfen Winkel abgewinkelten Kopfleiste 12, einer etwa im rechten Winkel abgewinkelten Fußleiste 13 und zwei etwa im rechten Winkel abgewinkelten Stirnleisten 14. Die Abmessungen der Kupplungselemente 10, insbesondere der Kopf- und Fußleisten 12, 13 sind auf das Kanalunterteil 1, insbesondere die Längsleisten 5 und die Deckelleisten 4, so abgestimmt, daß die Kupplungselemente 10 entweder von den Stirnseiten der Kanalabschnitte 1 aus klemmend eingeschoben oder wie in der Zeichnung angedeutet seitlich federnd unter die Deckelleiste 4 eingeclipst werden können.

Die Fig. 2 und 3 zeigen jeweils in perspektivischer Darstellung die Innenseite (Fig. 2) und die Außenseite (Fig. 3) eines Kupplungselements 10. Man erkennt die Rückenplatte 11 mit der Kopfleiste 12 oben, der Fußleiste 13 unten und den beiden Stirnleisten 14 vorn und hinten. Die Stirnleisten 14 sind mit einer zusätzlichen Verbreiterungsfläche ausgerüstet. Verstärkungsrippen 15 versteifen die Rückenplatte 11 des Kupplungselementes 10.

Etwa im Zentrum der Rückenplatte 11 ist durch einen dreiseitigen Freischnitt eine federnde Zunge 16 gebildet, die an ihrer Außenseite eine Nase 17 trägt, deren Querschnittsform einem rechtwinkligen Dreieck entspricht. Die senkrechte Rückseite der Nase 17 legt sich beim Montieren des Kupplungselements 10 an die Stirnfläche der Kanalseitenwand 3. Klemmnocken 18 an der Außenseite der Rückenwand 11 oberhalb und unterhalb der Zunge 16 sorgen für eine zusätzliche Klemmwirkung zwischen dem Kupplungselement 10 und der Kanalseitenwand 3 des Kanalabschnitts 1.

Anschließend wird der zweite Kanalabschnitt auf die beiden Kupplungselemente 10 aufgeschoben, bis dessen Stirnseiten die Nasen 17 an den Zungen 16 erreichen. Die Breite der Nase 17 entspricht der erforderlichen Dehnungsfuge, die zwischen zwei Kanalabschnitten 1 einzuhalten ist.

Alternativ dazu können die Kanalabschnitte 1 zunächst auch ohne Kupplungselemente 10 montiert werden. Die Kupplungselemente 10 werden dann zum Schluß eingeclipst.

Dehnen sich die Längenabschnitte 1 der Kanäle bzw. Kabelträgersysteme infolge Erwärmung aus, so verringert sich die Dehnungsfuge zwischen zwei Kanalabschnitten. Aufgrund der Schräge der Nase 17 und der Elastizität der Zunge 16 wird die Nase 17 elastisch zur Seite gedrückt und behindert somit den Längenausgleich nicht. Kühlen sich die Längenabschnitte wieder ab, vergrößert sich die Breite der Dehnungsfuge wieder, wobei die Kupplungselemente 10 wegen der zusätzlichen Klemmwirkung der Klemmnocken 18 ihre Position beibehalten.

Aufgrund der hervorragenden Klemmwirkung zwischen den Kupplungselementen 10 und den Kanalabschnitten 1 ergibt sich eine hohe Stabilität und Paßgenauigkeit des fertiggestellten Kanals bei minimalem Montageaufwand und optimaler Brauchbarkeit.

## Patentansprüche

1. Leitungsführungskanal mit einem U-förmigen, einseitig offenen Unterteil (1) mit Boden (2), zwei Seitenwänden (3), zwei schmalen, parallel zum Boden (2) verlaufenden Deckelleisten (4) mit etwa L-förmigem Querschnitt und zwei an der Innenseite des Bodens (2) angeformten Längsleisten (5) und mit zwei zur Verbindung zweier Kanalabschnitte dienenden Kupplungselementen (10), dadurch gekennzeichnet, daß das Kupplungselement (10) aus einer Rückenplatte (11), einer etwa im rechten Winkel abgewinkelten Fußleiste (13), einer im stumpfen Winkel abgewinkelten Kopfleiste (12) und zwei etwa im rechten Winkel abgewinkelten Stirnleisten (14) besteht und daß etwa im Zentrum der Rückenplatte (11) durch einen dreiseitigen Freischnitt eine Zunge (16) gebildet ist, die auf ihrer Außenseite eine Nase (17) trägt.

2. Leitungsführungskanal nach Anspruch 1, dadurch gekennzeichnet, daß an der Außenseite der Rückenplatte (11) ober- und unterhalb der Zunge (16) Klemmnocken (18) angeformt sind.

3. Leitungsführungskanal nach Anspruch 1 oder 2, dadurch gekennzeichnet, daß an der Stirnleiste (14) eine Vergrößerungsfläche angeformt ist.

4. Leitungsführungskanal nach einem der Ansprüche 1 bis 3, dadurch gekennzeichnet, daß an die Innenseite der Rückenplatte (11) Versteifungsrippen (15) angeformt sind.

5. Leitungsführungskanal nach einem der Ansprüche 1 bis 4, dadurch gekennzeichnet, daß die Querschnittsform der Zunge (16) einem rechtwinkligen Dreieck entspricht.

6. Leitungsführungskanal nach einem der Ansprüche 1 bis 5, dadurch gekennzeichnet, daß Kanalunterteil (1) und/oder Kupplungselement (10) aus faserverstärktem Kunststoff bestehen.

## Claims

1. Wiring duct with a U-shaped lower part (1) which is open on one side and has a base (2), two side walls (3), two narrow cover strips (4), these extending parallel to the base (2) and having an approximately L-shaped cross section, and two longitudinal strips (5), which are moulded onto the inside of the base (2), and with two coupling elements (10) for connecting two duct sections, characterised in that the coupling element (10) consists of a back plate (11), a bottom strip (13) bent approximately at a right angle, a top strip (12) bent at an obtuse angle and two end strips (14) bent approximately at a right angle, and that a tongue (16) is formed approximately in the centre of the back plate (11) by blanking on three sides, which tongue bears a lug (17) on its outside.

2. Wiring duct according to claim 1, characterised in that clamping projections (18) are moulded onto the outside of the back plate (11) above and below the tongue (16).

3. Wiring duct according to claim 1 or 2, characterised in that an enlarging area is moulded onto the end strip (14).

4. Wiring duct according to one of claims 1 to 3, characterised in that stiffening ribs (15) are moulded onto the inside of the back plate (11).

5. Wiring duct according to one of claims 1 to 4, characterised in that the cross-sectional shape of the tongue (16) corresponds to a right-angled triangle.

6. Wiring duct according to one of claims 1 to 5, characterised in that the lower duct part (1) and/or the coupling element (10) consist(s) of a fibre-reinforced plastics material.

## Revendications

1. Goulotte comprenant une partie inférieure (1) en forme de U, ouverte sur un côté, munie d'un fond (2), de deux parois latérales (3), de deux rebords de couvercle (4) de faible largeur et parallèles au fond (2), avec une section en L, et deux baguettes longitudinales (5) moulées contre la face intérieure du fond (2) et comprenant deux éléments de couplage (10) destinés à assembler deux sections de la goulotte, caractérisée en ce que l'élément de couplage (10) est formé par une plaque arrière (11), un rebord de base (13) replié pratiquement à angle droit, un rebord de tête (12) replié en formant un angle obtus et deux rebords frontaux (14) repliés pratiquement à angle droit, et en ce qu'une languette (16), dégagée par une découpe triangulaire, est formée pratiquement au centre de la plaque arrière (11) et porte un taquet (17) sur sa face extérieure.

2. Goulotte selon la revendication 1, caractérisée en ce que des ergots de blocage (18) sont moulés contre la face extérieure de la plaque arrière (11) au-dessus et au-dessous de la languette (16).

3. Goulotte selon la revendication 1 ou 2, caractérisée en ce qu'une surface élargissante est moulée contre le rebord frontal (14).

4. Goulotte selon l'une quelconque des revendications 1 à 3, caractérisée en ce que des nervures de raidissement (15) sont moulées contre la face intérieure de la plaque arrière (11).

5. Goulotte selon l'une quelconque des revendications 1 à 4, caractérisée en ce que la forme de la section de la languette (16) correspond à un triangle rectangle.

6. Goulotte selon l'une quelconque des revendications 1 à 5, caractérisée en ce que la partie inférieure du canal (1) et/ou l'élément de couplage (10) sont réalisés dans une matière synthétique renforcée par fibres.
